# EUROPEAN PATENT SPECIFICATION

(11) **EP 1 733 090 B1**
(45) Date of publication and mention of the grant of the patent: **16.10.2013**
(21) Application number: 05789786.0
(22) Date of filing: 23.02.2005
(51) Int. Cl.: D06F 37/30, H02K 1/12, H02K 1/18

(54) **STATOR OF OUTER ROTOR-TYPE MOTOR FOR DRUM-TYPE WASHING MACHINE**
STATOR FÜR ROTORAUSSENMOTOR EINER TROMMELWASCHMASCHINE
STATOR DE MOTEUR DE TYPE A ROTOR EXTERNE POUR MACHINE A LAVER A TAMBOUR

(30) Priority: 26.02.2004 KR 20040013000; 26.02.2004 KR 20040013001
(43) Date of publication of application: 20.12.2006
(73) Proprietor: LG Electronics Inc., 150-721 Seoul (KR)
(72) Inventor: CHOI, Soung Bong, Gyeongsangnam-do 641-934 (KR); LEE, Deug Hee, Gimhae-si, Gyeongsangnam-do 621-833 (KR)
(74) Representative: Vossius & Partner
(86) International application number: PCT/KR2005/000499
(87) International publication number: WO 2006/004247

(56) References cited:
- WO-A1-98/00902
- JP-A- 11 342 287
- US-A- 4 813 248
- US-A- 6 166 474

## Description

### Technical Field

The present invention relates to drum type washing machines, and more particularly, to a stator structure of an outer rotor type BLDC motor applicable to a direct coupling, drum type washing machine.

### Background Art

In general, a drum type washing machine, washing laundry by using a friction force between a drum rotated by a driving power of a motor and laundry in a state detergent, washing water, and the laundry are introduced into the drum, shows almost no damage to, and entangling of the laundry, and has pounding, and rubbing washing effects.

In the related art drum type washing machines, there are an indirect coupling type in which the driving power is transmitted from the motor to the drum through a belt wound on a motor pulley and a drum pulley indirectly, and a direct coupling type in which a rotor of a BLDC motor is coupled to the drum directly, to transmit the driving power from the motor to the drum, directly.

The type in which the driving power of the motor is transmitted to the drum, not directly, but indirectly through the motor pulley and the drum pulley, has much energy loss in the course of power transmission, and causes much noise in the course of power transmission.

According to this, for solving the problems of the indirect coupling, drum type washing machines, it is the present trend that use of the direct coupling, drum type washing machines with the BLDC motor is increasing.

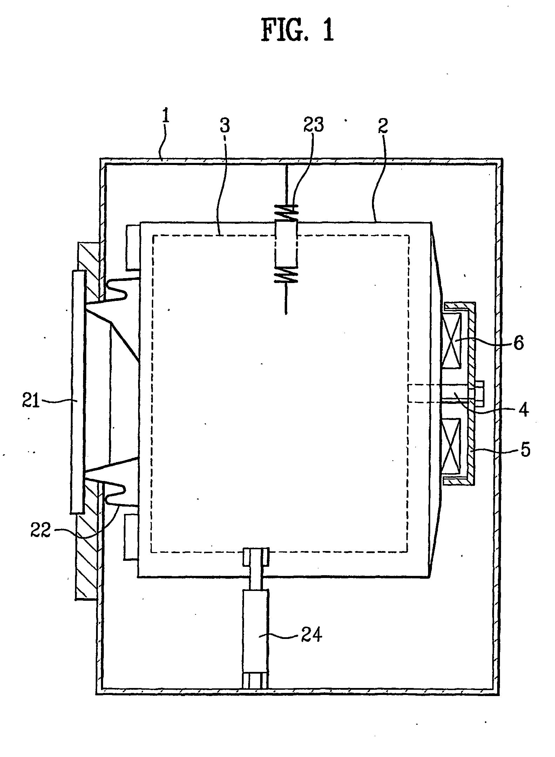

A related art direct coupling, drum type washing machine will be described with reference to FIG. 1, briefly. FIG 1 illustrates a longitudinal section of a related art drum type washing machine.

Referring to FIG. 1, the related art drum type washing machine is provided with a tub 2 mounted on an inside of a cabinet 1, and a drum 3 rotatably mounted on a central portion of an inside of the tub 2. There is a motor in rear of the tub 2, wherein a stator 6 is secured to a rear wall of the tub, and a rotor 5 surrounds the stator 6, and is connected to the drum 3 with a shaft passed through the tub.

In the meantime, there are a door 21 mounted on a front of the cabinet 1, and a gasket 22 between the door 21 and the tub 2.

There are hanging springs 23 between an inside surface of an upper portion of the cabinet 1, and an upper portion of an outside circumferential surface of the tub 2, and a friction damper 24 between the inside surface of a lower portion of the cabinet 1, and a lower portion of the outside circumferential surface of the tub 2.

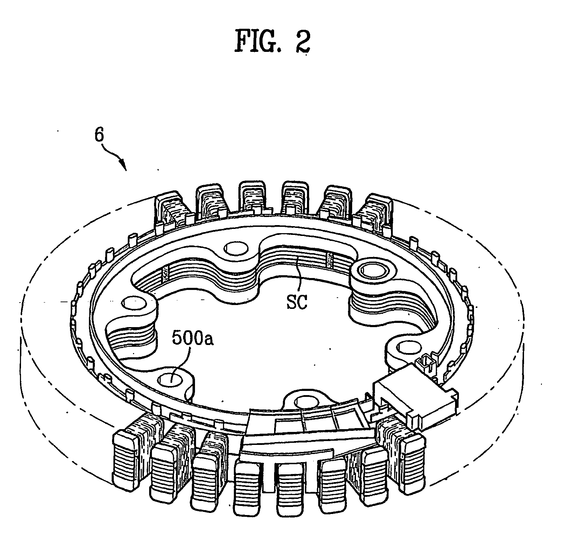

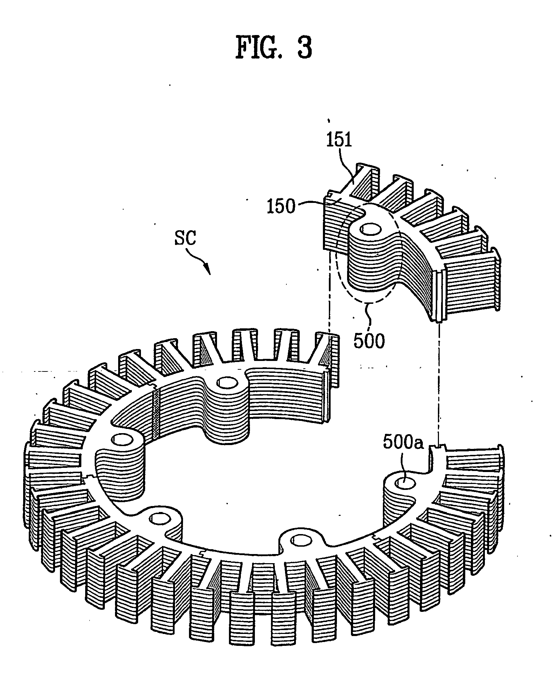

FIG. 2 illustrates a perspective exterior view of the stator in FIG 1, and FIG 3 illustrates a perspective view of a sectional core DC applied to the stator in FIG 2.

In a related art method for fabricating the core, a sheet of metal plate is pressed to form a unit core having Ts 151, a base 150, and projections 500 opposite to the Ts 151 each for forming fastening hole 500a therein, the unit cores are stacked to form a unit core assembly, and the unit core assemblies are joined to each other in a circumferential direction, to complete fabrication of the stator core, called the sectional core SC.

The projection 500 provides the fastening hole 620a for fastening the stator 6 to the rear wall of the tub, and serves to sustain a fastening force of a bolt.

However, the method for fabricating the stator 6 with the sectional core SC has, not only a complicate fabrication process, but also loss of much material.

Therefore, even if so called a helical type core HC is favorable, in which a sheet of steel plate having the Ts 151 and the base 150 is stacked turning in a helix, for reducing the material loss, and making the fabrication process simple, since it is required to bend the sheet of metal punched out in a shape of a belt into the helix, the helical core has a drawback in that the projection for fastening the stator to the tub can not be formed on an inner side of the core.

This is because, if the projection 500 is formed on the inner side of the core in fabrication of the helical core HC, a large width of the core at a portion having the projection formed thereon impedes bending of the core.

Therefore, currently, for employing the helical core HC, a stator structure is required, in which a function the same with the projection of the sectional core SC is made to be carried out, not by the core itself, but by other portion.

For reference, a reason why it is important to secure an adequate rigidity of the projection having the fastening hole for fastening the stator to the tub is as follows.

The washing machine in which the drum is directly rotated by the BLDC motor has the stator mounted on a rear portion of the tub, directly. In a case of the motor for a large capacity drum type washing machine with more than 1.5kg of stator net weight, and a spinning speed in a range of 600 ∼ 2000 RPM, it is liable that a fastened portion of the stator 6 is broken due to the stator weight, and vibration, shaking, and deformation of the rotor 5 in the high speed rotation.

Particularly, in a case of the drum type washing machine, in which the BLDC motor is used, and the stator 6 is secured to the tub rear wall, where an axis direction of the stator 6 is substantially parallel to ground, the vibration generated during operation of the washing machine causes intensive damage to the fastening portion of the stator 6 to the tub rear wall.

Thus, an adequate rigidity of the projection having the fastening hole formed therein is very important in fastening the stator 6 to the tub.

KR-A-20000012926 describes a stator according to the preamble of claim 1 or claim 21.

### Disclosure of Invention

An object of the present invention is to provide an outer rotor type motor for a drum type washing machine, which has a stator that can reduce material and weight required for fabrication, has a simple fabrication process, and can be mounted on a fixing side, such as a tub or a bearing housing, securely.

Another object of the present invention is to provide a new stator structure which can be mounted on a fixing side, such as a tub or a bearing housing securely while reducing material for fabrication as described before so as to be suitable for a BLDC motor of a drum type washing machine, which has a weight over 1.5kg only of the stator, and a rotation speed varying 0 ∼ 2,000RPM or over.

Another object of the present invention is to provide a stator structure, in which a reinforcing bracket is provided between upper, and lower insulators of a stator, for improving rigidity with respect to bending and twisting of the stator.

-A further object of the present invention is to provide a stator structure which can improve strength of fastening portions on upper, and lower insulators of the stator.

The object of the present invention can be achieved by providing a stator structure of an outer rotor type motor for a drum type washing machine including an annular core of a multi-layered structure formed by stacking a steel plate having a belt shaped base and Ts projected from the base while winding the steel plate in a helix starting from a bottom layer to a top layer, upper, and lower insulators of an electric insulating material covered on upper, and lower sides of the helical core in shapes complementary to a shape of the helical core, wherein each of the upper insulator and the lower insulator includes three of more than three fastening portions formed as one body therewith projected from an inner side of the helical core toward a center of the stator for fastening the stator to a fixing side of the tub, the fastening portion has a fastening hole for fastening the stator to a fixing side of the tub with a fastening member, and a reinforcing bracket is provided between the upper insulator and the lower insulator.

In another aspect of the present invention, a stator structure of an outer rotor type motor for a drum type washing machine includes an annular core of a multi-layered structure formed by stacking a steel plate having a belt shaped base and Ts projected from the base while winding the steel plate in a helix starting from a bottom layer to a top layer, an upper insulator of an electric insulating material covered on an upper side of the helical core in a shape complementary to a shape of the helical core, and a lower insulator of an electric insulating material covered on a lower side of the helical core at the time of assembly with the upper insulator in a shape complementary to a shape of the helical core, wherein each of the upper insulator and the lower insulator includes fastening portions formed as one body therewith projected from an inner side of the helical core toward a center of the stator for fastening the stator to a fixing side of the tub, the fastening portion having a boss constructing a fastening hole for fastening the stator to a fixing side of the tub with a fastening member, and guide ribs at inner sides of surfaces of the upper insulator and the lower insulator respectively where the upper insulator and the lower insulator are respectively in contact with an upper surface and a lower surface of the helical core connected between adjacent bosses for spreading a fastening force concentrated on the bosses, and reinforcing strength of the fastening portions.

According to this, the present invention enables secure mounting of the stator on a fixing side, such as a tub, while reducing materials and weight required for fabrication of the stator of a BLDC motor of a drum type washing machine, and simplifying a fabrication process.

Particularly, alike the case a sectional core is employed, the present invention enables secure mounting of the stator on a fixing side, such as a tub or a bearing housing, while reducing materials of the stator core and the insulators so as to be suitable for a BLDC motor of a drum type washing machine, having a weight over 1.5kg only of the stator, and a rotation speed varying 0 ∼ 2,000RPM or over.

The drum type washing machine of the present invention enables easy mounting of the stator on the tub in an assembly line, to enable easier repair work at the time of service.

By providing a reinforcing bracket between the upper insulator and the lower insulator, the drum type washing machine of the present invention enables strength of the upper, and lower insulators with respect to bending and twisting, to enhance rigidity of the stator with the upper, and lower insulators, to reduce noise and vibration, to improve mechanical reliability and extend a lifetime.

### Brief Description of Drawings

FIG. 1 illustrates a longitudinal section of a related art direct coupling type drum type washing machine, schematically;
FIG. 2 illustrates a perspective view of a related art stator;
FIG 3 illustrates a perspective view of the sectional core in FIG 2;
FIG 4 illustrates an exterior perspective view of a stator in accordance with a preferred embodiment of the present invention;
FIG. 5 illustrates an exploded perspective view of FIG 4;
FIG. 6 illustrates a back side perspective view of a portion of the upper insulator in FIG 5;
FIG 7 illustrates a plan view of key parts of the stator in FIG. 4;
FIGS. 8 and 9 are reference drawings, illustrating a versatility of application of the insulators;
FIG 10 illustrates a perspective view of an exterior of a stator in accordance with another preferred embodiment of the present invention;
FIG. 11 illustrates an exploded perspective view of FIG. 10;
FIG 12 illustrates a back side perspective view a portion of the upper insulator in FIG. 11;
FIG. 13 illustrates a plan view of key parts of the stator in FIG. 10; and
FIGS. 14 and 15 are reference drawings, illustrating a versatility of application of the insulators.

### Best Mode for Carrying Out the Invention

Embodiments of the present invention will be described with reference to the attached drawings 4 to 15.

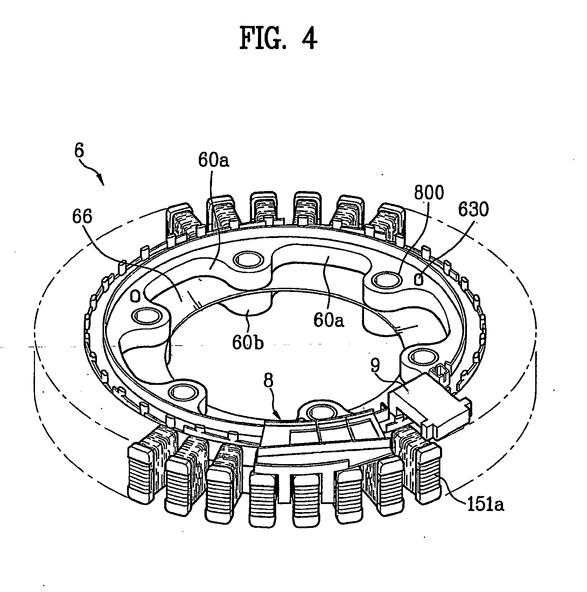

A preferred embodiment of the present invention will be described with reference to FIGS. 4 ∼ 8.

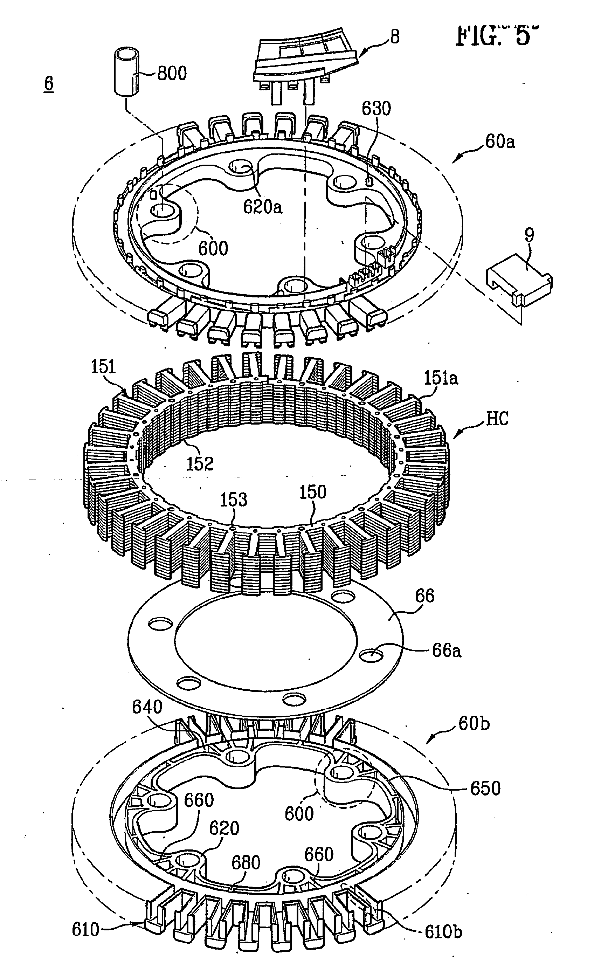

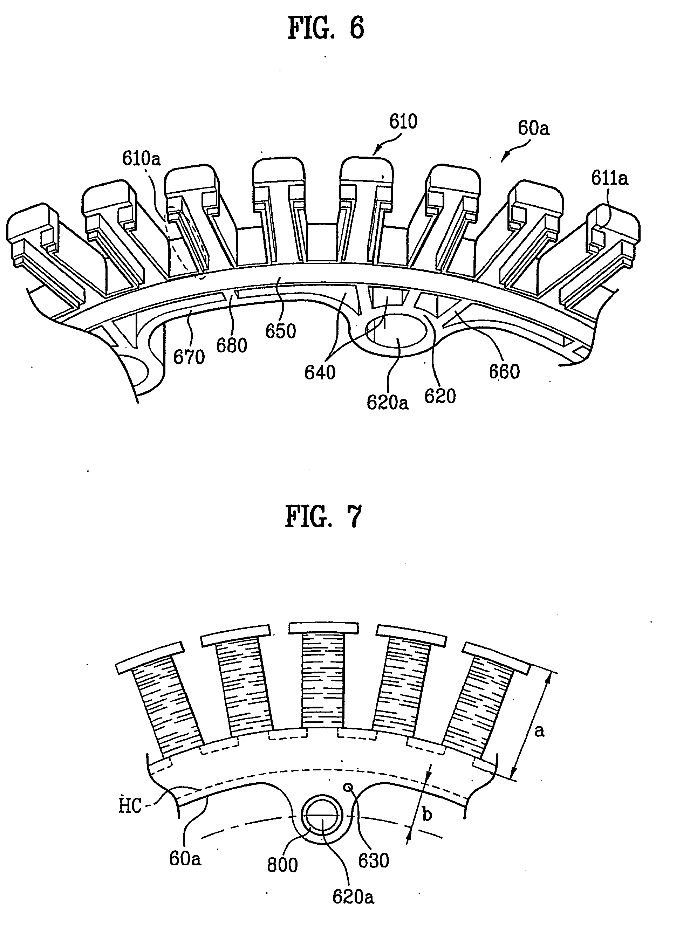

FIG 4 illustrates an exterior perspective view of a stator in accordance with a preferred embodiment of the present invention, FIG. 5 illustrates an exploded perspective view of FIG 4, and FIG. 6 illustrates a back side perspective view of a portion of the upper insulator in FIG. 5.

As shown, the stator 6 of an outer rotor type motor includes an annular helical core HC having a multi-layered structure formed by stacking a steel plate with a belt shapes base 150 and "T"-shaped members 151 projecting from the base 150 while winding the steel plate in a helix starting from a bottom layer to a top layer, an upper insulator 60a of an electric insulating material covered on an upper side of the helical core HC in a shape complementary to a shape of the helical core HC, and a lower insulator 60b of an electric insulating material covered on the lower side of the helical core HC at the time of assembly with the upper insulator 60a in a shape complementary to a shape of the helical core HC, wherein each of the upper insulator 60a and the lower insulator 60b includes three or more than three fastening portions 600 formed as one body therewith projected from an inner side of the helical core HC toward a center of the stator 6 for fastening the stator 6 to a fixing side of the tub.

The fastening portion 600 (see FIG 5) has a fastening hole 620a (see FIG 5) for securing the stator 6 to a fixing side, such as the tub, with a fastening member. The fastening hole 620a is constructed of a boss 620 projected to a back side of the fastening portion 600.

Each of the upper insulator 60a and the lower insulator 60b has a supporting rib 650 on an inside along a circumferential direction thereof in contact with the helical core HC for supporting an inside surface of the core.

The fastening portion 600 of each of the upper insulator 60a and the lower insulator 60b has at least one reinforcing rib 660 connected between the boss 620 of the fastening hole 620a and the supporting rib 650 for spreading fastening force concentrated on the boss 620 and reinforcing a strength of the fastening portion 600.

Moreover, the fastening portion 600 of each of the upper insulator 60a and the lower insulator 60b has a reinforcing rib 670 at an inside circumference thereof, and at least one connection rib 680 connected between the reinforcing rib 670 and the supporting rib 650 which supports an inside surface of the core in a radial direction, for providing a supporting force.

In the meantime, each of the upper insulator 60a and the lower insulator 60b has tips 610a and 610b on opposite sidewalls of each of the "T"-shaped members 610 thereof having shapes in complementary to each other for fitting in at the time of assembly to form a flush surface.

Each of the tips 610a and 610b on each of the "T"-shaped members 610 has a " 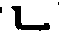 " shape if the other side has a " 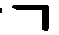 " shape.

At the opposite end surfaces substantially perpendicular to the opposite sidewall surfaces of the "T"-shaped member 610 of the upper insulator 60a and the lower insulator 60b, there are also the tips 610a and 610b having shape in complementary to each other.

The "T"-shaped member 610 of each of the upper insulator 60a and the lower insulator 60b has a seating surface 611a at an end for seating a core shoe 151a of the helical core HC.

Along with this, in the vicinity of the fastening hole 620a of the fastening portion 600 of the upper insulator 60a, there is a positioning projection 630 having a shape in complementary to a positioning hole or a slot (not shown) in the fixing side of the tub.

There is a cylindrical sleeve 800 in the fastening hole 620a, a spring pin having an elasticity owing to an incised portion, or a hollow pin enabling press fit in the fastening hole 620a, serves as a bushing..

There is a bracket 66 of a disk shape with a central hole between the upper insulator 60a and the lower insulator 60b for improving rigidity with respect to bending and twisting of the stator occurred at the time of assembly.

The reinforcing bracket 66 has pass through holes 66a in correspondence to the fastening holes 620a in the fastening portions 600 of the upper, and lower insulators 60a and 60b.

The reinforcing bracket 66 has an outside diameter smaller than an inside diameter of the annular helical core HC.

That is, the reinforcing bracket 66 is placed between the upper, and lower insulators without causing assembly interference with the helical core HC and the upper, and lower insulators.

The base 150 of the helical core HC has notches for reducing stress to make the winding of core easy, and the helical core HC is held together with a rivet 153 riveted through a pass through hole in the base 150.

A winding starting portion and a winding end portion of the helical core HC may be welded to predetermined portions of the base 150 in contact therewith respectively.

Referring to FIG 7, with regard to the stator 6 of the present invention having the fastening portions 600 each formed as one body with the upper insulator 60a, or the lower insulator 60b projected from three of more than three places of an inside circumferential surface of the core in a radial direction, the fastening portion 600 is formed such that an inequality of a≥b can be defined, where "a" denotes a length of each of the "T"-shaped members 151 projected from an outside surface of the helical core HC, and "b" denotes a distance from an inside surface of the helical core to a center of a fastening hole in the fastening portion 600.

In the meantime, referring to FIG. 5, an unexplained reference numeral 8 denotes a hole sensor assembly for controlling the motor, and 9 denotes a tap housing assembly for tapping power to supply the power to a stator side.

The work of the present invention will be described.

Different form the sectional core SC, the application of so called helical core HC, formed by stacking a steel plate having the "T"-shaped members 151 and the base 150 while winding the steel plate in a helix, to the present invention permits omitting steps of aligning, and welding the core segments, to simplify a fabrication process.

Moreover, different from the sectional core, since the helical core HC has no projection, the helical core HC permits to reduce waste of material.

That is, a method for fabricating a stator of the present invention not only simplifies a fabrication process, but also reduces waste of material.

Moreover, the reinforcing bracket 66 between the upper, and lower insulators 60a, and 60b enables to improve strength of the upper, and lower insulators 60a, and 60b with respect to bending and twisting of the stator 6, to improve reliability of the stator 6 having the upper, and lower insulators 60a, and 60b.

Along with this, even if no projections are formed at the core itself for sustaining the fastening force at the time of fastening the stator 6 to the tub side by way of improvement of structures of the upper, and the lower insulator 60a, and 60b, the stator 6 still has a rigidity enough to sustain the bolt fastening force.

That is, by providing structures that work the same with the projections of the sectional core SC to the fasting portions 600 of the upper, and lower insulators 60a, and 60b, a stator 6 can be provided, to which the helical core HC is applicable.

Moreover, spaces 640 between the ribs 650, 660, 670, and 680 at a back side of the fastening portion 600 dampen and attenuate vibration occurred during driving the motor, to improve mechanical reliability of the stator 6, and contributes to save material of the insulators.

In the meantime, the supporting ribs 650 of the upper insulator 60a and the lower insulator 60b formed at an inside in contact with the helical core HC along the circumferential direction support an inside surface of the helical core HC.

The reinforcing rib 660 connected between the boss 620 of the fastening hole 620a and the supporting rib 650 at each of the fastening portion 600 of the upper insulator 60a and the lower insulator 60b spreads the fastening force concentrated on the boss 620, and reinforces a strength of the fastening portion 600.

According to this, the stator 6 can effectively prevent a fastening portion of the stator 6 suffering from breakage caused by vibration at the time of spinning, and shaking and deformation of the rotor 5 even at a large capacity drum type washing machine having a weight over 1.5 kg only of the stator, and a spinning speed ranging 600 ∼ 2,000RPM.

As a positioning projection 630 in the vicinity of the fastening hole 620a of the fastening portion 600 fits in a positioning hole (not shown) in the tub 2, fastening of the stator 6 is easy.

Thus, the positioning projection enables an easy assembly of the stator 6 with the tub 2, and a serviceman to make an easy repair at the time of after service.

Of course, the positioning projection 630 may be formed on the tub 2, and the positioning hole may be formed in the fastening portion 600.

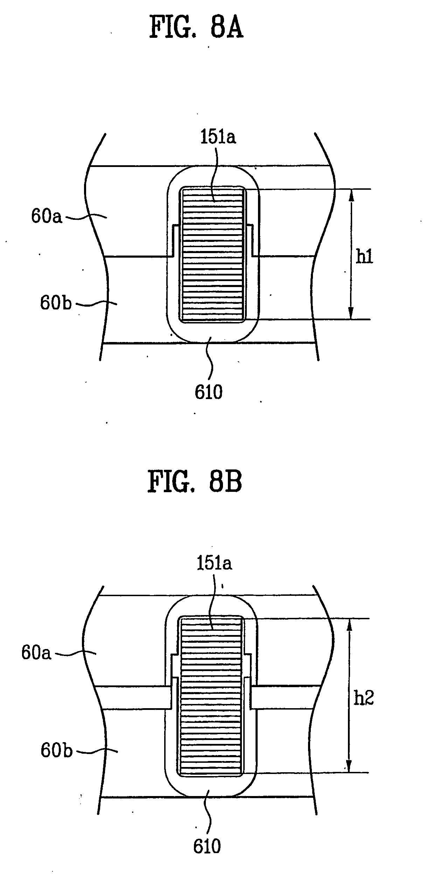

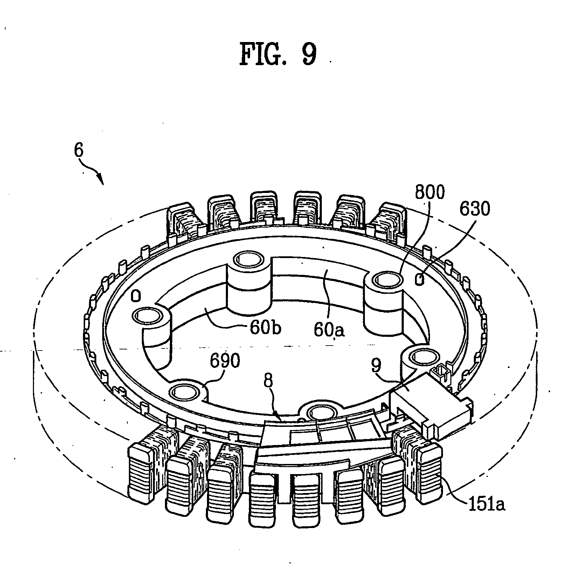

In the meantime, FIGS. 8 and 9 are reference drawings, illustrating a versatility of application of the insulators, wherein it can be noted that the upper, and lower insulators 60a and 60b are applicable even if a total height of the helical core varies within a certain range.

That is, FIG. 8 illustrates a case when a total height h1 of the core is a height which permits tips 610a and 610b of the upper, and lower insulators 60a and 60b fit exactly, and FIG. 9 illustrates a case when a total height of the core is a height greater than a case of FIG. 8 such that the tips 610a and 610b (see FIGS. 5 and 6) of the upper, and lower insulators 60a and 60b unable to fit exactly, but spaced a certain distance.

Even if the total height h2 of the core is greater than a height that permits the tips 610a and 610b of the upper, and lower insulators 60a and 60b fit exactly, such that there is a space between the tips 610a and the 610b, because the insulation against the core Ts is still achievable, the upper, and lower insulators 60a and 60b are applicable to the case of FIG. 9, too.

Thus, since the separate type upper, and lower insulators of the embodiment are applicable to the core regardless of the total height of the core within a certain range of the total height, the separate type upper, and lower insulators of the embodiment can improve workability on an assembly line.

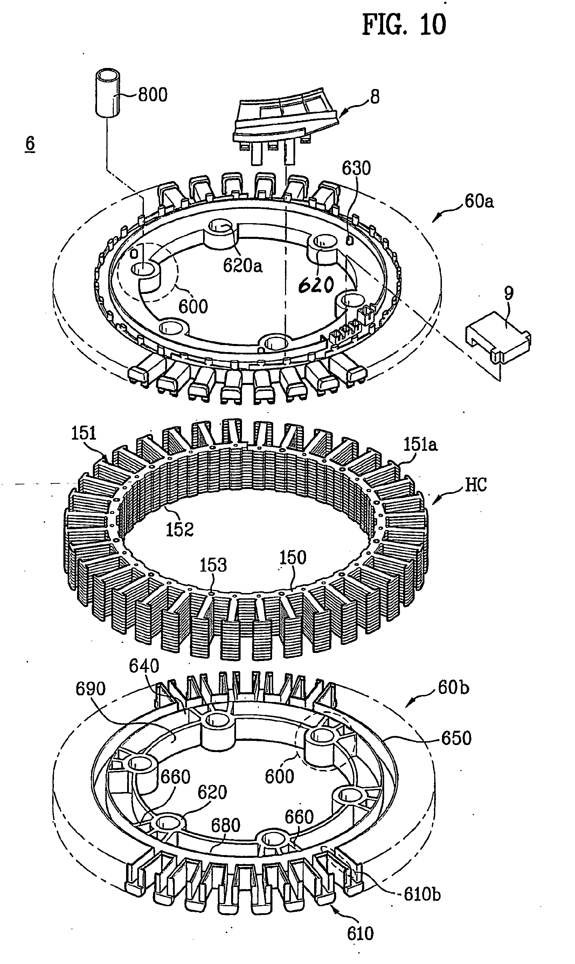

Another embodiment of the present invention will be described with reference to FIGS. 10 to 15.

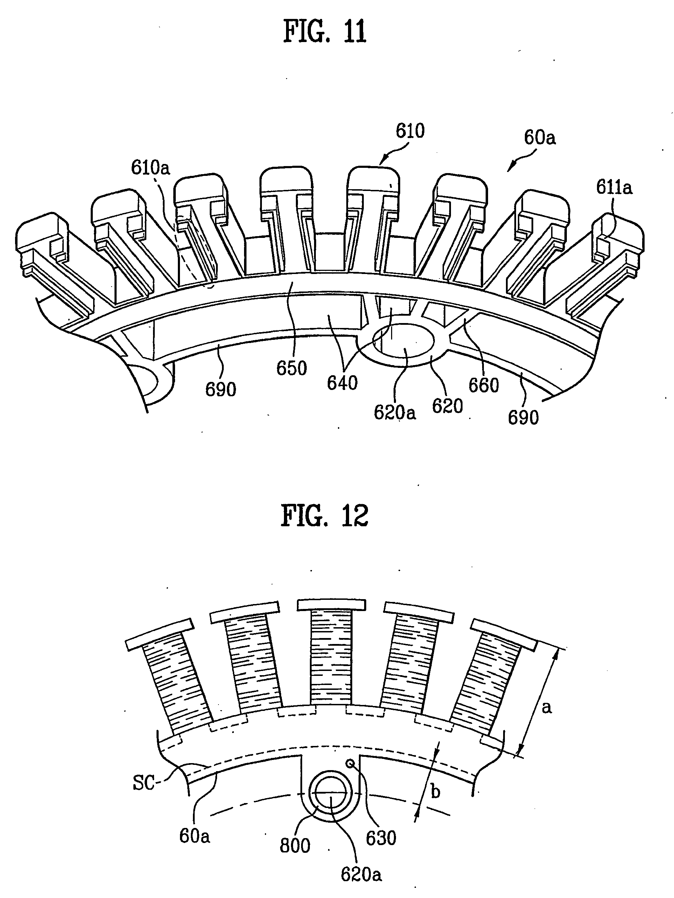

FIG. 10 illustrates a perspective view of an exterior of a stator in accordance with another preferred embodiment of the present invention, FIG. 11 illustrates an exploded perspective view of FIG. 10, and FIG. 12 illustrates a back side perspective view a portion of the upper insulator in FIG. 11.

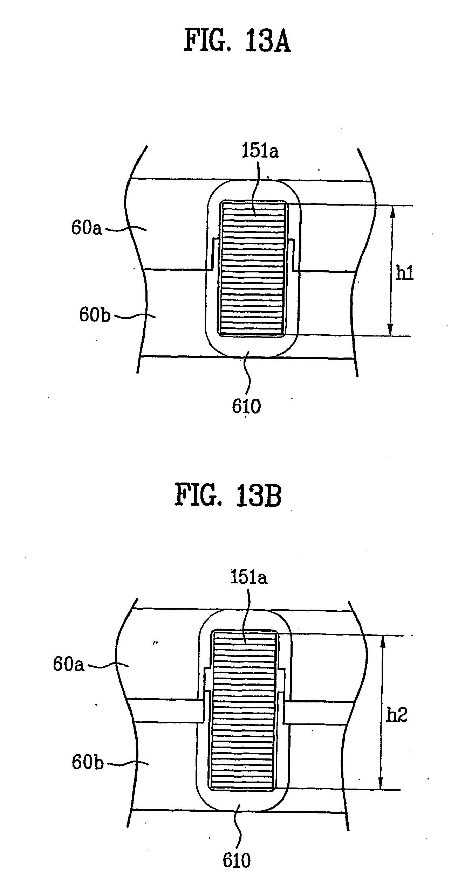

FIG 13 illustrates a plan view of key parts of the stator in FIG 10, and FIGS. 14 and 15 are reference drawings, illustrating a versatility of application of the insulators.

Description of parts of the stator 6 of an outer rotor type motor in accordance with another preferred embodiment of the present invention identical to the foregoing embodiment will be omitted, and only characterized portions thereof will be described.

The stator of the outer rotor type motor in accordance with another preferred embodiment of the present invention includes guide ribs 690 at inner sides of surfaces of the upper insulator 60a and the lower insulator 60b respectively where the upper insulator 60a and the lower insulator 60b are respectively in contact with an upper surface and a lower surface of the helical core HC connected between adjacent bosses 620 for spreading a fastening force concentrated on the bosses 620, and reinforcing strength of the fastening portions.

The guide rib 690 is connected to an outside surface of the boss 620, such that imaginary extension lines from opposite ends of adjacent guide ribs 690 passes a center of the fastening hole 620a, and the guide ribs 690 altogether form a circle, substantially.

The work of the embodiment will be described.

Different form the sectional core SC, the application of so called helical core HC, formed by stacking a steel plate having the "T"-shaped members 151 and the base 150 while winding the steel plate in a helix, to the present invention permits omitting steps of aligning, and welding the core segments, to simplify a fabrication process.

Moreover, different from the sectional core, since the helical core HC has no projection, the helical core HC permits to reduce waste of material.

That is, a method for fabricating a stator of the embodiment not only simplifies a fabrication process, but also reduces waste of material.

Along with this, even if no projections are formed at the core itself for sustaining the fastening force at the time of fastening the stator 6 to the tub side by way of improvement of structures of the upper, and the lower insulator 60a, and 60b, the stator 6 still has a rigidity enough to sustain the bolt fastening force.

That is, by providing structures that work the same with the projections of the sectional core SC to the fasting portions 600 of the upper, and lower insulators 60a, and 60b, a stator 6 can be provided, to which the helical core HC is applicable.

Moreover, spaces 640 between the ribs 650, 660, 670, and 680 at a back side of the fastening portion 600 dampen and attenuate vibration occurred during driving the motor, to improve mechanical reliability of the stator 6, and contributes to save material of the insulators.

A vibration absorbing material may be filled in the spaces 640, for enhancing the dampening and attenuating action with respect to the vibration, further.

In the meantime, the supporting ribs 650 of the upper insulator 60a and the lower insulator 60b formed at inside in contact with the helical core HC along the circumferential direction support an inside surface of the helical core HC.

The reinforcing rib 660 connected between the boss 620 of the fastening hole 620a and the supporting rib 650 at each of the fastening portion 600 of the upper insulator 60a and the lower insulator 60b spreads the fastening force concentrated on the boss 620, and reinforces a strength of the fastening portion 600.

Moreover, the guide ribs 690 connected between adjacent bosses 620 on an inner side of the supporting rib 650 spread the fastening force concentrated on the bosses 620, as well as enhance strength of the fastening portions 600, further.

According to this, the stator 6 can effectively prevent a fastening portion of the stator 6 suffering from breakage caused by vibration at the time of spinning, and shaking and deformation of the rotor 5 even at a large capacity drum type washing machine having a weight over 1.5 kg only of the stator, and a spinning speed ranging 600 ∼ 2,000RPM.

As a positioning projection 630 in the vicinity of the fastening hole 620a of the fastening portion 600 fits in a positioning hole (not shown) in the tub 2, fastening of the stator 6 is easy.

Thus, the positioning projection enables an easy assembly of the stator 6 with the tub 2, and a serviceman to make an easy repair at the time of after service.

Of course, the positioning projection 630 may be formed on the tub 2, and the positioning hole may be formed in the fastening portion 600.

In the meantime, FIGS. 14 and 15 are reference drawings, illustrating a versatility of application of the insulators, wherein, alike the foregoing embodiment, it can be noted that the upper, and lower insulators 60a and 60b of the embodiment are applicable even if a total height of the helical core HC varies within a certain range.

Thus, since the separate type upper, and lower insulators of the embodiment are applicable to the core regardless of the total height of the core within a certain range of the total height too, the separate type upper, and lower insulators of the embodiment can improve workability on an assembly line.

### Industrial Applicability

The present invention permits reducing materials and weight required for fabrication of a stator of a BLDC motor for a drum type washing machine, and secure mounting of the stator to a fixing side like a tub in an assembly line, to improve productivity and saving production cost.

The easy mounting of the stator to the tub in an assembly line permits easy maintenance in service.

Moreover, the reinforcing bracket between the upper insulator and the lower insulator improves strength of the upper insulator and the lower insulator with respect to bending and twisting of the stator, which enhances rigidity of the stator, leading to reduce noise and vibration, and improve mechanical reliability and extend a lifetime, thereby providing a high industrial applicability.

## Claims

1. A stator structure of an outer rotor type motor for a drum type washing machine comprising:
an annular core (HC) of a multi-layered structure formed by stacking a steel plate having a belt shaped base (150) and "T"-shaped members (151) projecting from the base (150) while winding the steel plate in a helix starting from a bottom layer to a top layer;
an upper insulator (60a) of an electric insulating material covering an upper side of the helical core (HC) in a shape complementary to the shape of the helical core(HC); and
a lower insulator (60b) of an electric insulating material covering a lower side of the helical core (HC) at the time of assembly with the upper insulator (60a) in a shape complementary to the shape of the helical core(HC),
wherein each of the upper insulator (60a) and the lower insulator (60b) include fastening portions (600) formed as one body therewith,
the stator (6) being **characterized in that**
the fastening portion (600) is projected from an inner side of the helical core (HC) toward a center of the stator (6) for fastening the stator (6) to a fixing side of the tub, and
a reinforcing bracket (66) is provided between the upper insulator (60a) and the lower insulator (60b).

2. The stator structure as claimed in claim 1, wherein the fastening portion (600) has a fastening hole (620a) for fastening the stator (6) to a fixing side of the tub with a fastening member.

3. The stator structure as claimed in claim 1, wherein the reinforcing bracket (66) has a disk shape with a central hole, having pass-through holes in correspondence to the fastening holes in the fastening portions (600).

4. The stator structure as claimed in claim 3, wherein the reinforcing bracket (66) has an outside diameter smaller than an inside diameter of the annular helical core (HC).

5. The stator structure as claimed in claim 1, wherein the fastening hole (620a) in the fastening portion (600) is constructed of a boss (620) projected toward a back side of the fastening portion (600).

6. The stator structure as claimed in claim 1, wherein the upper insulator (60a) and the lower insulator (60b) each have a supporting rib (650) on an inner side of a radial direction of a surface of each of the upper insulator (60a) and the lower insulator (60b) in contact with an upper or lower surface of the helical core (HC) along a circumferential direction thereof for supporting an inside surface of said helical core (HC).

7. The stator structure as claimed in claim 6, wherein the fastening portion (600) of each of the upper insulator (60a) and the lower insulator (60b) includes at least one reinforcing rib (660) connected between the boss (620) which constructs the fastening hole (620a) and the supporting ribs (650) for spreading the fastening force concentrated on the boss (620) and for reinforcing the strength of said fastening portion (600).

8. The stator structure as claimed in claim 1, wherein the upper insulator (60a) and the lower insulator (60b) each further include tips (610a, 610b) on opposite sidewalls of each of lower (610a, the "T"-shaped members (610) thereof having shapes in complementary to each other for fitting in at the time of assembly to form a flush surface.

9. The stator structure as claimed in claim 8, wherein each of the tips (610a, 610b) on each of the "T"-shaped members (610) has a "L" shape if the other side has a " 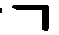 " shape.

10. The stator structure as claimed in claim 1, wherein the upper insulator (60a) and the lower insulator (60b) each further include tips (610a, 610b) having shapes complementary to each other to form a flush surface at the opposite end surfaces substantially perpendicular to the opposite sidewall surfaces of the "T"-shaped members (610).

11. The stator structure as claimed in claim 1, wherein the upper insulator (60a) and the lower insulator (60b) each further include a seating surface (611a) projected from an outer side of each of the opposite end walls of the "T"-shaped members (610) for seating a core shoe of the helical core (HC).

12. The stator structure as claimed in claim 1, wherein the fastening portion (600) of the upper insulator (60a) includes a positioning projection (630) in the vicinity of the fastening hole (620a), having a shape complementary to a positioning hole or a slot in the fixing side of the tub.

13. The stator structure as claimed in claim 1, further comprising a cylindrical sleeve (800) placed in the fastening hole (620a).

14. The stator structure as claimed in claim 13, wherein the cylindrical sleeve (800) is a spring pin having an elasticity owing to an incised portion along a length direction of an outside circumferential surface.

15. The stator structure as claimed in claim 13, wherein the cylindrical sleeve (800) is a hollow pin without an incised portion to press fit in the fastening hole (620a).

16. The stator structure as claimed in claim 1, wherein the base (150) of the helical core (HC) has notches for reducing stress at the time of winding said helical core (HC).

17. The stator structure as claimed in claim 13, wherein the helical core (HC) is held together with a rivet (153) riveted through a pass-through hole in the base (150).

18. The stator structure as claimed in claim 1, wherein the helical core (HC) includes a winding starting portion and a winding end portion welded to predetermined portions of the base (150) in contact therewith, respectively.

19. The stator structure as claimed in claim 1, wherein the fastening portion (600) is formed such that a relation a≥b can be defined, where "a" denotes a length of each of the "T"-shaped members (151) projected from an outside surface of the helical core (HC), and "b" denotes a distance from an inside surface of the helical core (HC) to a center of a fastening hole (620a) in the fastening portion (600).

20. The stator structure as claimed in claim 1, wherein the fastening portion (600) has a fastening hole (620a) for fastening the stator (6) to a fixing side of the tub with a fastening member, and
the reinforcing bracket (66) has a disk shape with a central hole, and pass-through holes in correspondence to the fastening holes (620a) in the fastening portions (600).

21. A stator structure of an outer rotor type motor for a drum type washing machine comprising:
an annular core (HC) of a multi-layered structure formed by stacking a steel plate having a belt shaped base (150) and "T"-shaped members (151) projecting from the base (150) while winding the steel plate in a helix starting from a bottom layer to a top layer;
an upper insulator (60a) of an electric insulating material covering an upper side of the helical core (HC) having a shape complementary to the shape of the helical core (HC); and
a lower insulator (60b) of an electric insulating material covering a lower side of the helical core (HC) at the time of assembly with the upper insulator (60a) having a shape complementary to the shape of the helical core (HC),
wherein each of the upper insulator (60a) and the lower insulator (60b) include fastening portions (600) formed as one body therewith,
the stator structure being **characterized in that**
the fastening portion (600) is projected from an inner side of the helical core (HC) toward a center of the stator (6) for fastening the stator (6) to a fixing side of the tub, the fastening portion (600) having a boss (620) constructing a fastening hole (620a) for fastening the stator (6) to a fixing side of the tub with a fastening member, and
guide ribs (690) at the inner sides of the surfaces of the upper insulator (60a) and the lower insulator (60b), where the upper insulator (60a) and the lower insulator (60b) are respectively in contact with an upper surface and a lower surface of the helical core (HC), are provided between adjacent bosses (620) for spreading the fastening force concentrated on the bosses (620), and for reinforcing the strength of the fastening portions (600).

22. The stator structure as claimed in claim 21, wherein the guide rib (690) is connected to an outside surface of the boss (620), such that the imaginary extension lines from opposite ends of adjacent guide ribs (690) pass-through a center of the fastening hole (620a).

23. The stator structure as claimed in claim 22, wherein the guide ribs (690) altogether form a circle, substantially.

24. The stator structure as claimed in claim 21, wherein the upper insulator (60a) and the lower insulator (60b) each have a supporting rib (650) on an inner side of a radial direction of a surface of each of the upper insulator (60a) and the lower insulator (60b) in contact with an upper or lower surface of the helical core (HC) along a circumferential direction thereof for supporting an inside surface of said helical core (HC).

25. The stator structure as claimed in claim 24, wherein at least one reinforcing rib (660) is connected between the boss (620) of the fastening hole (620a) and the supporting rib (650) to spread the fastening force concentrated on the boss (620) and to reinforce strength of the fastening portion (600).

26. The stator structure as claimed in claim 21, wherein the upper insulator (60a) and the lower insulator (60b) each further include tips (610a, 610b) on opposite sidewalls of each of the "T"-shaped members (610) thereof having shapes complementary to each other for fitting in at the time of assembly to form a flush surface.

27. The stator structure as claimed in claim 26, wherein each of the tips (610a, 610b) on each of the "T"-shaped members (610) has a " 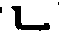 " shape if the other side has a " 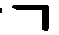 " shape.

28. The stator structure as claimed in claim 21, wherein the upper insulator (60a) and the lower insulator (60b) each further include tips (610a, 610b) having shapes complementary to each other to form a flush surface at the opposite end surfaces substantially perpendicular to the opposite sidewall surfaces of the "T"-shaped member (610).

29. The stator structure as claimed in claim 21, wherein the upper insulator (60a) and the lower insulator (60b) each further include a seating surface (611a) projected from an outer side of each of opposite end walls of the "T"-shaped members (610) for seating a core shoe (151a) of the helical core (HC).

30. The stator structure as claimed in claim 21, wherein the fastening portion (600) of the upper insulator (60a) includes a positioning projection (630) in the vicinity of the fastening hole (620a), having a shape complementary to a positioning hole or a slot in the fixing side of the tub.

31. The stator structure as claimed in claim 21, further comprising a cylindrical sleeve (800) placed in the fastening hole (620a).

32. The stator structure as claimed in claim 31, wherein the cylindrical sleeve (800) is a spring pin having an elasticity owing to an incised portion along a length direction of an outside circumferential surface.

33. The stator structure as claimed in claim 31, wherein the cylindrical sleeve (800) is a hollow pin without an incised portion to press fit in the fastening hole (620a).

34. The stator structure as claimed in claim 21, wherein the base (150) of the helical core (HC) has notches for reducing stress at the time of winding the helical core (HC).

35. The stator structure as claimed in claim 21, wherein the helical core (HC) is held together with a rivet (153) riveted through a pass-through hole in the base (150).

36. The stator structure as claimed in claim 21, wherein the helical core (HC) includes a winding starting portion and a winding end portion welded to predetermined portions of the base (150) in contact therewith, respectively.

37. The stator structure as claimed in claim 21, wherein the fastening portion (600) is formed such that a relation a≥b can be defined, where "a" denotes the length of each of the "T"-shaped members (151) projected from an outside surface of the helical core (HC), and "b" denotes the distance from an inside surface of the helical core (HC) to a center of a fastening hole (620a) in the fastening portion (600).

## Patentansprüche

1. Statorstruktur für einen Rotoraußenmotor einer Trommelwaschmaschine, die aufweist:
einen ringförmigen Kern (HC) mit einer vielschichtigen Struktur, der durch Stapeln einer Stahlplatte mit einer gürtelförmigen Basis (150) und "T"-förmiger Elemente (151), die von der Basis (150) vorstehen, ausgebildet wird, während die Stahlplatte in einer Spirale beginnend von einer unteren Schicht zu einer oberen Schicht gewickelt wird;
einen oberen Isolator (60a) aus einem elektrisch isolierenden Material, der eine Oberseite des spiralförmigen Kerns (HC) in einer Form bedeckt, die komplementär zu der Form des spiralförmigen Kerns (HC) ist; und
einen unteren Isolator (60b) aus einem elektrisch isolierenden Material, der zur Zeit der Montage mit dem oberen Isolator (60a) eine Unterseite des spiralförmigen Kerns (HC) in einer Form bedeckt, die komplementär zu der Form des spiralförmigen Kerns (HC) ist,
wobei der obere Isolator (60a) und der untere Isolator (60b) jeweils Befestigungsabschnitte (600) umfassen, die als ein Körper damit ausgebildet sind,
wobei der Stator (6) **dadurch gekennzeichnet ist, dass**
der Befestigungsabschnitt (600) von einer Innenseite des spiralförmigen Kerns (HC) in Richtung einer Mitte des Stators (6) zum Befestigen des Stators (6) an einer Befestigungsseite des Zubers vorsteht, und
eine Verstärkungshalterung (66) zwischen dem oberen Isolator (60a) und dem unteren Isolator (60b) bereitgestellt ist.

2. Statorstruktur nach Anspruch 1, wobei der Befestigungsabschnitt (600) ein Befestigungsloch (620a) zum Befestigen des Stators (6) an einer Befestigungsseite des Zubers mit einem Befestigungselement hat.

3. Statorstruktur nach Anspruch 1, wobei die Verstärkungshalterung (66) eine Scheibenform mit einem Mittelloch hat, die Durchgangslöcher hat, welche den Befestigungslöchern in den Befestigungsabschnitten (600) entsprechen.

4. Statorstruktur nach Anspruch 3, wobei die Verstärkungshalterung (66) einen Außendurchmesser hat, der kleiner als ein Innendurchmesser des ringförmigen spiralförmigen Kerns (HC) ist.

5. Statorstruktur nach Anspruch 1, wobei das Befestigungsloch (620a) in dem Befestigungsabschnitt (600) aus einem Ansatz (620) aufgebaut ist, der in Richtung einer Rückseite des Befestigungsabschnitts (600) vorsteht.

6. Statorstruktur nach Anspruch 1, wobei der obere Isolator (60a) und der untere Isolator (60b) jeweils eine Halterippe (650) auf einer Innenseite einer Radialrichtung einer Oberfläche jeweils des oberen Isolators (60a) und des unteren Isolators (60b) in Kontakt mit einer oberen oder unteren Oberfläche des spiralförmigen Kerns (HC) entlang dessen Umfangsrichtung haben, um eine Innenoberfläche des spiralförmigen Kerns (HC) zu halten.

7. Statorstruktur nach Anspruch 6, wobei der Befestigungsabschnitt (600) jeweils des oberen Isolators (60a) und des unteren Isolators (60b) wenigstens eine Verstärkungsrippe (660) umfasst, der zwischen dem Ansatz (620), der das Befestigungsloch (620a) aufbaut, und den Verstärkungsrippen (650) verbindet, um die auf den Ansatz (620) konzentrierte Befestigungskraft zu verteilen und um die Festigkeit dieses Befestigungsabschnitts (600) zu verstärken.

8. Statorstruktur nach Anspruch 1, wobei der obere Isolator (60a) und der untere Isolator (60b) jeweils ferner Spitzen (610a, 610b) auf entgegengesetzten Seitenwänden jedes seiner "T"-förmigen Elemente (610) umfassen, welche zueinander komplementäre Formen haben, um zur Zeit der Montage zusammenzupassen, um eine bündige Oberfläche zu bilden.

9. Statorstruktur nach Anspruch 8, wobei jede der Spitzen (610a, 610b) auf jedem der "T"-förmigen Elemente (610) eine " 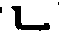 "-Form hat, wenn die andere Seite eine " 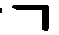 "-Form hat.

10. Statorstruktur nach Anspruch 1, wobei der obere Isolator (60a) und der untere Isolator (60b) jeweils ferner Spitzen (610a, 610b) mit zueinander komplementären Formen umfassen, um eine bündige Oberfläche an den entgegengesetzten Endoberflächen im Wesentlichen senkrecht zu den entgegengesetzten Seitenwandoberflächen der "T"-förmigen Elemente (610) zu bilden.

11. Statorstruktur nach Anspruch 1, wobei der obere Isolator (60a) und der untere Isolator (60b) ferner jeweils eine Auflageoberfläche (611a) umfassen, die von einer Außenseite jeder der entgegengesetzten Endwände der "T"-förmigen Elemente (610) vorsteht, um einen Kernschuh des spiralförmigen Kerns (HC) zu lagern.

12. Statorstruktur nach Anspruch 1, wobei der Befestigungsabschnitt (600) des oberen Isolators (60a) einen Positionierungsvorsprung (630) in der Nachbarschaft des Befestigungslochs (620a) umfasst, welcher eine Form hat, die zu einem Positionierungsloch oder einem Schlitz in der Befestigungsseite des Zubers komplementär ist.

13. Statorstruktur nach Anspruch 1, die ferner eine zylindrische Muffe (800) aufweist, die in dem Befestigungsloch (620a) angeordnet ist.

14. Statorstruktur nach Anspruch 13, wobei die zylindrische Muffe (800) ein Federstift mit einer Elastizität aufgrund eines eingeschnittenen Abschnitts entlang einer Längenrichtung einer Außenumfangsoberfläche ist.

15. Statorstruktur nach Anspruch 13, wobei die zylindrische Muffe (800) ein Hohlstift ohne einen eingeschnittenen Abschnitt ist, um in das Befestigungsloch (620a) pressgepasst zu werden.

16. Statorstruktur nach Anspruch 1, wobei die Basis (150) des spiralförmigen Kerns (HC) Kerben hat, um Spannungen zur Zeit des Wickelns des spiralförmigen Kerns (HC) zu verringern.

17. Statorstruktur nach Anspruch 13, wobei der spiralförmige Kern (HC) zusammen mit einer Niete (153), die durch ein Durchgangsloch in der Basis (150) vernietet ist, gehalten wird.

18. Statorstruktur nach Anspruch 1, wobei der spiralförmige Kern (HC) einen Wicklelanfangsabschnitt und einen Wickelendabschnitt umfasst, die jeweils in Kontakt damit an vorbestimmte Abschnitte der Basis (150) geschweißt sind.

19. Statorstruktur nach Anspruch 1, wobei der Befestigungsabschnitt (600) derart ausgebildet ist, dass eine Beziehung a ≥ b definiert werden kann, wobei "a" eine Länge jedes der "T"-förmigen Elemente (151), die aus einer Außenoberfläche des spiralförmigen Kerns (HC) vorstehen, bezeichnet, und "b" einen Abstand von einer Innenoberfläche des spiralförmigen Kerns (HC) zu einer Mitte eines Befestigungslochs (620a) in dem Befestigungsabschnitt (600) bezeichnet.

20. Statorstruktur nach Anspruch 1, wobei der Befestigungsabschnitt (600) ein Befestigungsloch (620a) zum Befestigen des Stators (6) an einer Befestigungsseite des Zubers mit einem Befestigungselement hat, und
die Verstärkungshalterung (66) eine Scheibenform mit einem Mittelloch und Durchgangslöchern hat, welche den Befestigungslöchern (620a) in den Befestigungsabschnitten (600) entsprechen.

21. Statorstruktur für einen Rotoraußenmotor einer Trommelwaschmaschine, die aufweist:
einen ringförmigen Kern (HC) mit einer vielschichtigen Struktur, der durch Stapeln einer Stahlplatte mit einer gürtelförmigen Basis (150) und "T"-förmiger Elemente (151), die von der Basis (150) vorstehen, ausgebildet wird, während die Stahlplatte in einer Spirale beginnend von einer unteren Schicht zu einer oberen Schicht gewickelt wird;
einen oberen Isolator (60a) aus einem elektrisch isolierenden Material, der eine Oberseite des spiralförmigen Kerns (HC) mit einer Form bedeckt, die komplementär zu der Form des spiralförmigen Kerns (HC) ist; und
einen unteren Isolator (60b) aus einem elektrisch isolierenden Material, der zur Zeit der Montage mit dem oberen Isolator (60a) eine Unterseite des spiralförmigen Kerns (HC) mit einer Form bedeckt, die komplementär zu der Form des spiralförmigen Kerns (HC) ist,
wobei der obere Isolator (60a) und der untere Isolator (60b) jeweils Befestigungsabschnitte (600) umfassen, die als ein Körper damit ausgebildet sind,
wobei die Statorstruktur **dadurch gekennzeichnet ist, dass**
der Befestigungsabschnitt (600) von einer Innenseite des spiralförmigen Kerns (HC) in Richtung einer Mitte des Stators (6) zum Befestigen des Stators (6) an einer Befestigungsseite des Zubers vorsteht, wobei der Befestigungsabschnitt (600) einen Ansatz (620) hat, der ein Befestigungsloch (620a) zum Befestigen des Stators (6) an einer Befestigungsseite des Zubers mit einem Befestigungselement aufbaut, und
Führungsrippen (690) auf den Innenseiten der Oberflächen des oberen Isolators (60a) und des unteren Isolators (60b) zwischen benachbarten Ansätzen (620) bereitgestellt sind, wobei der obere Isolator (60a) und der untere Isolator (60b) jeweils in Kontakt mit einer oberen Oberfläche und einer unteren Oberfläche des spiralförmigen Kerns (HC) sind, um die auf die Ansätze (620) konzentrierte Befestigungskraft zu verteilen und um die Festigkeit der Befestigungsabschnitte (600) zu verstärken.

22. Statorstruktur nach Anspruch 21, wobei die Führungsrippe (690) mit einer Außenoberfläche des Ansatzes (620) verbunden ist, so dass die imaginären Verlängerungslinien von entgegengesetzten Enden benachbarter Führungsrippen (690) durch eine Mitte des Befestigungslochs (620a) gehen.

23. Statorstruktur nach Anspruch 22, wobei die Führungsrippen (690) insgesamt im Wesentlichen einen Kreis bilden.

24. Statorstruktur nach Anspruch 21, wobei der obere Isolator (60a) und der untere Isolator (60b) jeweils eine Verstärkungsrippe (650) auf einer Innenseite einer Radialrichtung einer Oberfläche jeweils des oberen Isolators (60a) und des unteren Isolators (60b) in Kontakt mit einer oberen oder unteren Oberfläche des spiralförmigen Kerns (HC) entlang seiner Umfangsrichtung haben, um eine Innenoberfläche des spiralförmigen Kerns (HC) zu halten.

25. Statorstruktur nach Anspruch 24, wobei wenigstens eine Verstärkungsrippe (660) zwischen dem Ansatz (620) des Befestigungslochs (620a) und der Halterippe (650) verbunden ist, um die auf den Ansatz (620) konzentrierte Befestigungskraft zu verteilen und die Festigkeit des Befestigungsabschnitts (600) zu verstärken.

26. Statorstruktur nach Anspruch 21, wobei der obere Isolator (60a) und der untere Isolator (60b) jeweils ferner Spitzen (610a, 610b) auf entgegengesetzten Seitenwänden jedes seiner "T"-förmigen Elemente (610) mit zueinander komplementären Formen umfassen, um zur Zeit der Montage hinein zu passen, um eine bündige Oberfläche zu bilden.

27. Statorstruktur nach Anspruch 26, wobei jede der Spitzen (610a, 610b) auf jedem der "T"-förmigen Elemente (610) eine " 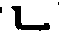 "-Form hat, wenn die andere Seite eine " 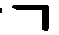 "-Form hat.

28. Statorstruktur nach Anspruch 21, wobei der obere Isolator (60a) und der untere Isolator (60b) jeweils ferner Spitzen (610a, 610b) mit zueinander komplementären Formen umfassen, um eine bündige Oberfläche an den entgegengesetzten Endoberflächen im Wesentlichen senkrecht zu den entgegengesetzten Seitenwandoberflächen des "T"-förmigen Elements (610) zu bilden.

29. Statorstruktur nach Anspruch 21, wobei der obere Isolator (60a) und der untere Isolator (60b) jeweils ferner eine Auflageoberfläche (611a) umfassen, die von einer Außenseite jeder der entgegengesetzten Endwände der "T"-förmigen Elemente (610) vorsteht, um einen Kernschuh (151a) des spiralförmigen Kerns (HC) zu lagern.

30. Statorstruktur nach Anspruch 21, wobei der Befestigungsabschnitt (600) des oberen Isolators (60a) einen Positionierungsvorsprung (630) in der Nachbarschaft des Befestigungslochs (620a) mit einer Form aufweist, die zu einem Positionierungsloch oder einem Schlitz in der Befestigungsseite des Zubers komplementär ist.

31. Statorstruktur nach Anspruch 21, die ferner eine zylindrische Muffe (800) aufweist, die in dem Befestigungsloch (620a) angeordnet ist.

32. Statorstruktur nach Anspruch 31, wobei die zylindrische Muffe (800) ein Federstift mit einer Elastizität aufgrund eines eingeschnittenen Abschnitts entlang einer Längenrichtung einer Außenumfangsoberfläche ist.

33. Statorstruktur nach Anspruch 31, wobei die zylindrische Muffe (800) ein Hohlstift ohne einen eingeschnittenen Abschnitt ist, um in das Befestigungsloch (620a) pressgepasst zu werden.

34. Statorstruktur nach Anspruch 21, wobei die Basis (150) des spiralförmigen Kerns (HC) Kerben hat, um Spannungen zur Zeit des Wickelns des spiralförmigen Kerns (HC) zu verringern.

35. Statorstruktur nach Anspruch 21, wobei der spiralförmige Kern (HC) zusammen mit einer Niete (153), die durch ein Durchgangsloch in der Basis (150) vernietet ist, gehalten wird.

36. Statorstruktur nach Anspruch 21, wobei der spiralförmige Kern (HC) einen Wickelanfangsabschnitt und einen Wickelendabschnitt umfasst, die jeweils in Kontakt damit an vorbestimmte Abschnitte der Basis (150) geschweißt sind.

37. Statorstruktur nach Anspruch 21, wobei der Befestigungsabschnitt (600) derart ausgebildet ist, dass eine Beziehung a ≥ b definiert werden kann, wobei "a" die Länge jedes der "T"-förmigen Elemente (151), die aus einer Außenoberfläche des spiralförmigen Kerns (HC) vorstehen, bezeichnet, und "b" den Abstand von einer Innenoberfläche des spiralförmigen Kerns (HC) zu einer Mitte eines Befestigungslochs (620a) in dem Befestigungsabschnitt (600) bezeichnet.

## Revendications

1. Structure de stator d'un moteur à rotor extérieur pour une machine à laver à tambour comprenant :
un noyau annulaire (HC) à structure multicouche formée en empilant une plaque en acier ayant une base en forme de ceinture (150) et des organes en forme de « T » (151) faisant saillie à partir de la base (150) tout en enroulant la plaque en acier en hélice en allant d'une couche inférieure à une couche supérieure ;
un isolateur supérieur (60a) en un matériau électriquement isolant enrobant un côté supérieur du noyau hélicoïdal (HC) dans une forme complémentaire à la forme du noyau hélicoïdal (HC) ; et
un isolateur inférieur (60b) en un matériau électriquement isolant couvrant un côté inférieur du noyau hélicoïdal (HC) lors de l'assemblage avec l'isolateur supérieur (60a) dans une forme complémentaire à la forme du noyau hélicoïdal (HC),
dans laquelle chacun des isolateurs supérieur (60a) et inférieur (60b) comprend des portions de fixation (600) faisant partie intégrante avec eux,
le stator (6) étant **caractérisé en ce que**
la portion de fixation (600) est en saillie sur un côté intérieur du noyau hélicoïdal (HC) vers un centre du stator (6) pour fixer le stator (6) à un côté d'attache de la cuve, et
un cadre de renforcement (66) est prévu entre l'isolateur supérieur (60a) et l'isolateur inférieur (60b).

2. Structure de stator selon la revendication 1, dans laquelle la portion de fixation (600) a un trou de fixation (620a) pour fixer le stator (6) à un côté d'attache de la cuve avec un organe de fixation.

3. Structure de stator selon la revendication 1, dans laquelle le cadre de renforcement (66) a une forme de disque avec un trou central, ayant des trous traversants en correspondance avec les trous de fixation dans les portions de fixation (600).

4. Structure de stator selon la revendication 3, dans laquelle le cadre de renforcement (66) a un diamètre extérieur plus petit qu'un diamètre intérieur du noyau hélicoïdal annulaire (HC).

5. Structure de stator selon la revendication 1, dans laquelle le trou de fixation (620a) dans la portion de fixation (600) est formé d'une bosse (620) en saillie vers un côté carrière de la portion de fixation (600).

6. Structure de stator selon la revendication 1, dans laquelle l'isolateur supérieur (60a) et l'isolateur inférieur (60b) ont chacun une nervure de soutien (650) sur un côté intérieur d'une direction radiale d'une surface de chacun des isolateurs supérieur (60a) et inférieur (60b) en contact avec une surface supérieure ou inférieure du noyau hélicoïdal (HC) le long d'une direction circonférentielle de celui-ci pour soutenir une surface intérieure dudit noyau hélicoïdal (HC).

7. Structure de stator selon la revendication 6, dans laquelle la portion de fixation (600) de chacun des isolateurs supérieur (60a) et inférieur (60b) comprend au moins une nervure de renforcement (660) connectée entre la bosse (620) qui forme le trou de fixation (620a) et les nervures d'appui (650) pour répartir la force de fixation concentrée sur la bosse (620) et pour renforcer la résistance de ladite portion de fixation (600).

8. Structure de stator selon la revendication 1, dans laquelle l'isolateur supérieur (60a) et l'isolateur inférieur (60b) comprennent en outre chacun des bouts (610a, 610b) sur des parois latérales opposées des organes en forme de « T » (610) ayant des formes complémentaires les uns des autres en vue d'une coopération lors de l'assemblage pour former une surface affleurante.

9. Structure de stator selon la revendication 8, dans laquelle chacun des bouts (610a, 610b) sur chacun des organes en forme de « T » (610) a une forme de « 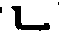 » si l'autre côté a une forme de « 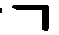 ».

10. Structure de stator selon la revendication 1, dans laquelle l'isolateur supérieur (60a) et l'isolateur inférieur (60b) comprennent en outre chacun des bouts (610a, 610b) ayant des formes complémentaires les uns des autres pour former une surface affleurante au niveau des surfaces d'extrémité opposées, sensiblement perpendiculaires aux surfaces latérales opposées des organes en forme de « T » (610).

11. Structure de stator selon la revendication 1, dans laquelle l'isolateur supérieur (60a) et l'isolateur inférieur (60b) comprennent en outre chacun une surface de portée (611a) faisant saillie à partir d'un côté extérieur de chacune des parois d'extrémité opposées des organes en forme de « T » (610) pour recevoir un sabot de noyau du noyau hélicoïdal (HC).

12. Structure de stator selon la revendication 1, dans laquelle la portion de fixation (600) de l'isolateur supérieur (60a) comprend une saillie de positionnement (630) à proximité du trou de fixation (620a), ayant une forme complémentaire à un trou de positionnement ou à une fente dans le côté d'attache de la cuve.

13. Structure de stator selon la revendication 1, comprenant en outre un manchon cylindrique (800) placé dans le trou de fixation (620a).

14. Structure de stator selon la revendication 13, dans laquelle le manchon cylindrique (800) est une tige formant ressort ayant une élasticité due à une portion incisée le long d'une direction longitudinale d'une surface circonférentielle extérieure.

15. Structure de stator selon la revendication 13, dans laquelle le manchon cylindrique (800) est une tige creuse sans portion incisée pour être insérée à force dans le trou de fixation (620a).

16. Structure de stator selon la revendication 1, dans laquelle la base (150) du noyau hélicoïdal (HC) a des encoches pour réduire les contraintes lors de l'enroulement dudit noyau hélicoïdal (HC).

17. Structure de stator selon la revendication 13, dans laquelle le noyau hélicoïdal (HC) est maintenu par un rivet (153) rivé à travers un trou traversant dans la base (150).

18. Structure de stator selon la revendication 1, dans laquelle le noyau hélicoïdal (HC) comprend une portion de début d'enroulement et une portion de fin d'enroulement respectivement soudées à des portions prédéterminées de la base (150) en contact avec elles.

19. Structure de stator selon la revendication 1, dans laquelle la portion de fixation (600) est formée telle qu'une relation a≥b puisse être définie, où « a » désigne une longueur de chacun des organes en forme de « T » (151) faisant saillie à partir d'une surface extérieure du noyau hélicoïdal (HC), et « b » désigne une distance d'une surface intérieure du noyau hélicoïdal (HC) à un centre d'un trou de fixation (620a) dans la portion de fixation (600).

20. Structure de stator selon la revendication 1, dans laquelle la portion de fixation (600) a un trou de fixation (620a) for fixer le stator (6) à un côté d'attache de la cuve avec un organe de fixation, et
le cadre de renforcement (66) a une forme de disque avec un trou central, et des trous traversants en correspondance avec les trous de fixation (620a) dans les portions de fixation (600).

21. Structure de stator d'un moteur à rotor extérieur pour une machine à laver à tambour comprenant :
un noyau annulaire (HC) à une structure multicouche formée en empilant une plaque en acier ayant une base en forme de ceinture (150) et des organes en forme de « T » (151) faisant saillie à partir de la base (150) tout en enroulant la plaque en acier dans une hélice en allant d'une couche inférieure à une couche supérieure ;
un isolateur supérieur (60a) en un matériau électriquement isolant couvrant un côté supérieur du noyau hélicoïdal (HC) ayant une forme complémentaire à la forme du noyau hélicoïdal (HC) ; et
un isolateur inférieur (60b) en un matériau électriquement isolant couvrant un côté inférieur du noyau hélicoïdal (HC) lors de l'assemblage avec l'isolateur supérieur (60a) ayant une forme complémentaire à la forme du noyau hélicoïdal (HC),
dans laquelle chacun des isolateurs supérieur (60a) et inférieur (60b) comprend des portions de fixation (600) faisant partie intégrante avec eux,
la structure de stator (6) étant **caractérisée en ce que**
la portion de fixation (600) est en saillie sur un côté intérieur du noyau hélicoïdal (HC) vers un centre du stator (6) for fixer le stator (6) à un côté d'attache de la cuve, la portion de fixation (600) ayant une bosse (620) formant un trou de fixation (620a) pour fixer le stator (6) à un côté d'attache de la cuve avec un organe de fixation, et
des nervures de guidage (690) au niveau des côtés intérieurs des surfaces de l'isolateur supérieur (60a) et de l'isolateur inférieur (60b), où l'isolateur supérieur (60a) et l'isolateur inférieur (60b) sont respectivement en contact avec une surface supérieure et une surface inférieure du noyau hélicoïdal (HC), sont prévues entre des bosses adjacentes (620) pour répartir la force de fixation concentrée sur les bosses (620), et pour renforcer la résistance des portions de fixation (600).

22. Structure de stator selon la revendication 21, dans laquelle la nervure de guidage (690) est connectée à une surface extérieure de la bosse (620), de telle sorte que les lignes d'extension imaginaires depuis les extrémités opposées des nervures de guidage adjacentes (690) passent par un centre du trou de fixation (620a).

23. Structure de stator selon la revendication 22, dans laquelle l'ensemble des nervures de guidage (690) forme un cercle, sensiblement.

24. Structure de stator selon la revendication 21, dans laquelle l'isolateur supérieur (60a) et l'isolateur inférieur (60b) ont chacun une nervure de soutien (650) sur un côté intérieur d'une direction radiale d'une surface de chacun des isolateurs supérieur (60a) et inférieur (60b) en contact avec une surface supérieure ou inférieure du noyau hélicoïdal (HC) le long d'une direction circonférentielle de celui-ci pour soutenir une surface intérieure dudit noyau hélicoïdal (HC).

25. Structure de stator selon la revendication 24, dans laquelle au moins une nervure de renforcement (660) connectée entre la bosse (620) du trou de fixation (620a) et la nervure de soutien (650) pour répandre la force de fixation concentrée sur la bosse (620) et pour renforcer la résistance de ladite portion de fixation (600).

26. Structure de stator selon la revendication 21, dans laquelle l'isolateur supérieur (60a) et l'isolateur inférieur (60b) comprennent en outre chacun des bouts (610a, 610b) sur des parois latérales opposées de chacun des organes en forme de « T » (610) ayant des formes complémentaires les uns des autres en vue d'une coopération lors de l'assemblage pour former une surface affleurante.

27. Structure de stator selon la revendication 26, dans laquelle chacun des bouts (610a, 610b) sur chacun des organes en forme de « T » (610) a une forme de « 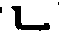 » si l'autre côté a une forme de « 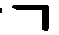 ».

28. Structure de stator selon la revendication 21, dans laquelle l'isolateur supérieur (60a) et l'isolateur inférieur (60b) comprennent en outre chacun des bouts (610a, 610b) ayant des formes complémentaires les uns des autres pour former une surface affleurante au niveau des surfaces d'extrémité opposées sensiblement perpendiculaire aux surfaces des parois latérales opposées des organes en forme de « T » (610).

29. Structure de stator selon la revendication 21, dans laquelle l'isolateur supérieur (60a) et l'isolateur inférieur (60b) comprennent en outre chacun une surface de portée (611a) faisant saillie à partir d'un côté extérieur de chacune des parois d'extrémité opposées des organes en forme de « T » (610) pour recevoir un sabot de noyau du noyau hélicoïdal (HC).

30. Structure de stator selon la revendication 21, dans laquelle la portion de fixation (600) de l'isolateur supérieur (60a) comprend une saillie de positionnement (630) à proximité du trou de fixation (620a), ayant une forme complémentaire à un trou de positionnement ou à une fente dans le côté d'attache de la cuve.

31. Structure de stator selon la revendication 21, comprenant en outre un manchon cylindrique (800) placé dans le trou de fixation (620a).

32. Structure de stator selon la revendication 31, dans laquelle le manchon cylindrique (800) est une tige formant ressort ayant une élasticité due à une portion incisée le long d'une direction longitudinale d'une surface circonférentielle extérieure.

33. Structure de stator selon la revendication 31, dans laquelle le manchon cylindrique (800) est une tige creuse sans portion incisée pour être insérée à force dans le trou de fixation (620a).

34. Structure de stator selon la revendication 21, dans laquelle la base (150) du noyau hélicoïdal (HC) a des encoches pour réduire les contraintes lors de l'enroulement dudit noyau hélicoïdal (HC).

35. Structure de stator selon la revendication 21, dans laquelle le noyau hélicoïdal (HC) est maintenu par un rivet (153) rivé à travers un trou traversant dans la base (150).

36. Structure de stator selon la revendication 21, dans laquelle le noyau hélicoïdal (HC) comprend une portion de début d'enroulement et une portion de fin d'enroulement respectivement soudées aux portions de base prédéterminées (150) en contact avec elles.

37. Structure de stator selon la revendication 21, dans laquelle la portion de fixation (600) est formée telle qu'une relation a≥b puisse être définie, où « a » désigne une longueur de chacun des organes en forme de « T » (151) faisant saillie à partir d'une surface extérieure du noyau hélicoïdal (HC), et « b » désigne une distance d'une surface intérieure du noyau hélicoïdal (HC) à un centre d'un trou de fixation (620a) dans la portion de fixation (600).
